# EUROPEAN PATENT SPECIFICATION

(11) **EP 2 740 936 B1**
(45) Date of publication and mention of the grant of the patent: **07.09.2016**
(21) Application number: 12822380.7
(22) Date of filing: 11.07.2012
(51) Int. Cl.: F04B 45/04, F04B 45/047, H01M 8/04, H01M 8/10

(54) **FUEL CELL SYSTEM**
BRENNSTOFFZELLENSYSTEM
SYSTÈME DE PILE À COMBUSTIBLE

(30) Priority: 05.08.2011 JP 2011171569
(43) Date of publication of application: 11.06.2014
(73) Proprietor: Panasonic Corporation, Kadoma-shi, Osaka 571-8501 (JP)
(72) Inventor: HATANO, Susumu, Chuo-ku, Osaka-shi, Osaka 540-6207 (JP); TAMURA, Yoshio, Chuo-ku, Osaka-shi, Osaka 540-6207 (JP); SATO, Yoshihiro, Chuo-ku, Osaka-shi, Osaka 540-6207 (JP); TAKAHASHI, Manabu, Chuo-ku, Osaka-shi, Osaka 540-6207 (JP); FUJIKAWA, Takaaki, Chuo-ku, Osaka-shi, Osaka 540-6207 (JP)
(74) Representative: Grünecker Patent- und Rechtsanwälte PartG mbB
(86) International application number: PCT/JP2012/004481
(87) International publication number: WO 2013/021547

(56) References cited:
- WO-A1-2008/069264
- JP-A- 2001 182 662
- JP-A- 2001 355 574
- JP-A- 2005 256 834
- JP-A- 2006 029 258
- JP-A- 2009 233 515
- JP-A- 2010 162 487

## Description

### Technical Field

The present invention relates to a fuel cell system. Particularly, the present invention relates to a fuel cell system using an electromagnetic diaphragm pump in a supply section of a reactive gas.

### Background Art

As a conventional fuel cell system, there is known a fuel cell apparatus which generates electric power through an electrochemical reaction between a hydrogen-containing gas and air as an oxidizing gas. In this fuel cell apparatus, a fuel cell air blower supplies air to a cathode of a fuel cell body. A reformer reforms a fuel supplied from the fuel blower into a hydrogen-rich gas and supplies the hydrogen-rich gas to an anode of the fuel cell body. The fuel cell body generates DC power through a reaction between the hydrogen-rich gas and the oxygen (see, e.g., Patent Literature 1).

Meanwhile, there is known an electromagnetic diaphragm pump as a supply device of a fluid (see, for example, Patent Literature 2, Patent Literature 3).

### Citation Lists

### Patent Literature

Patent Literature 1: Japanese Laid-Open Patent Application Publication No. 2008-84564
Patent Literature 2: Japanese Laid-Open Patent Application Publication No. 2005-273477
Patent Literature 3: Japanese Laid-Open Patent Application Publication No. Hei. 2-64278

### Summary of the Invention

### Technical Problem

The electromagnetic diaphragm pump has a simple structure, does not include a sliding section, is excellent in durability and is inexpensive. The electromagnetic diaphragm pump may be used as the fuel cell air blower and the fuel blower in the fuel cell system disclosed in Patent Literature 1. However, the use of electromagnetic diaphragm pump will cause a problem. However, such a problem is not mentioned at all in Patent Literature 1.

### Solution to Problem

The present invention has been made under the circumstances, and an object of the present invention is to provide a fuel cell system using an electromagnetic diaphragm pump in a supply section of a reactive gas, which is capable of suppressing a reduction of a power generation efficiency during use under a low-temperature environment and for a long period of time.

### Solution to Problem

According to an aspect of the present invention, there is provided a fuel cell system comprising: a fuel cell for generating electric power through an electrochemical reaction between a hydrogen-containing gas and an oxidizing gas; an electromagnetic diaphragm pump for supplying one of the hydrogen-containing gas and the oxidizing gas to the fuel cell at a flow rate corresponding to a voltage and a frequency of an AC voltage applied to the electromagnetic diaphragm pump; a flow detector for detecting a flow rate of the gas supplied from the electromagnetic diaphragm pump to the fuel cell; and a controller for controlling the voltage and the frequency of the AC voltage (hereinafter referred to as applied AC voltage) applied to the electromagnetic diaphragm pump; wherein the controller is configured to set the frequency of the applied AC voltage, control the voltage of the applied AC voltage in the set frequency to cause the flow rate of the gas detected by the flow detector to reach a target flow rate; and the controller is configured to newly set the frequency of the applied AC voltage to a frequency at which the voltage of the applied AC voltage becomes smaller than a predetermined voltage when the voltage of the applied AC voltage becomes equal to or greater than the predetermined voltage.

### Advantageous Effects of the Invention

The present invention achieves an advantage that in a fuel cell system using an electromagnetic diaphragm pump in a supply section of a reactive gas, it is possible to provide a fuel cell system which can suppress a reduction of a power generation efficiency during use under a low-temperature environment and for a long period of time.

The above and further objects, features and advantages of the present invention will more fully be apparent from the following detailed description of preferred embodiments with accompanying drawings.

### Brief Description of the Drawings

[Fig. 1] Fig. 1 is a functional block diagram schematically showing a configuration of a fuel cell system according to Embodiment 1 of the present invention.
[Fig. 2] Fig. 2 is a cross-sectional view showing an electromagnetic diaphragm pump used in the fuel cell system of Fig. 1.
[Fig. 3] Fig. 3 is a flowchart showing an example of supply control of a reactive gas in the fuel cell system of Fig. 1.
[Fig.4] Fig. 4 is a graph schematically showing a relationship between an operation time and a voltage of an AC voltage applied to the electromagnetic diaphragm pump in the fuel cell system of Fig. 1.
[Fig. 5] Fig. 5 is a graph showing a relationship between the voltage and the frequency of the AC voltage applied to the electromagnetic diaphragm pump of Fig. 2.
[Fig. 6] Fig. 6 is a graph showing a relationship between electric power consumption and the operation time in the fuel cell system of Fig. 1.
[Fig. 7] Fig. 7 is a graph showing a relationship between a noise and the frequency of the AC voltage applied to the electromagnetic diaphragm pump in the fuel cell system of Fig. 1.
[Fig. 8] Fig. 8 is a flowchart showing an example of supply control of the reactive gas in a fuel cell system according to Embodiment 2 of the present invention.

### Description of the Embodiments

### (Findings which is a basis of the present invention)

The present inventors intensively studied the problem associated with the fuel cell system which is caused by using the electromagnetic diaphragm pump in the supply section of the reactive gas and measures for solving this problem. As a result, the present inventors found out the followings.

### <Problem caused by using electromagnetic diaphragm pump>

To increase a power generation efficiency (ratio of a power generation energy to a raw material energy) in the fuel cell system, for example, two things are required. Firstly, a power generation time per day is made as long as possible, in a range of an electric power demand. Secondarily, electric power consumption in auxiliary devices, especially a fluid supply section which consumes electric power with a great amount is suppressed.

In a case where the fuel cell system is used as a generator for household use, it is treated as relatively expensive equipment. Because of this, the fuel cell system is requited to have long durable years (e.g., 10 years). However, as the power generation time in the fuel cell system increases, the durable years of the fuel cell system will be reduced.

A rubber material of a diaphragm of the electromagnetic diaphragm pump will be hardened in a low-temperature environment or due to degradation which progresses over time due to a low-time use. In the hardened diaphragm, a tensile stress required to expand the rubber to a certain amount will become greater than that of the diaphragm before being hardened. Because of this, in the electromagnetic diaphragm pump which outputs the air by utilizing expansion and contraction of the rubber, electric power consumption required to output the air with a certain amount increases, which results in reduction of the power generation efficiency.

Thus, when the electromagnetic diaphragm pump is used as the supply section (fluid supply section) of the reactive gas, the power generation efficiency will be reduced in use under the low-temperature environment and for a long period of time.

### <Measures for solving the problem>

As the measures for solving the above described problem, the amount of expansion and contraction of the rubber of the diaphragm may be reduced by decreasing a moving distance of the diaphragm. According to the measures, a load in a reciprocation motion of the diaphragm is reduced. Therefore, even when the rubber is hardened, electric power consumption in the electromagnetic diaphragm pump can be suppressed, and hence the reduction of the power generation efficiency can be suppressed. However, in this measures, the output amount of the electromagnetic diaphragm pump per reciprocation motion (stroke) is reduced due to the decrease in the moving distance of the diaphragm. Therefore, measures for preventing the reduction in the output amount must be provided to cover a particular fluid supply amount.

As this measures, a fluid contact area of the diaphragm rubber may possibly be increased. However, in this measures, a size of the electromagnetic diaphragm pump increases and hence an installation space of the fuel cell system and cost of the fuel cell system increase. In view of this, this measures is not good.

Accordingly, the present inventors paid attention to the fact that the output amount of the electromagnetic diaphragm pump is proportional to a frequency of an AC voltage applied to the electromagnetic diaphragm pump. If the frequency of the AC voltage applied to the electromagnetic diaphragm pump (hereinafter this voltage will be referred to as applied AC voltage) is increased, then the number of times of the reciprocation motion of the diagraph can be increased and the output amount of the electromagnetic diaphragm pump can be increased. Note that the voltage (voltage value) of the applied AC voltage required to attain the certain output amount changes depending on the frequency of the AC voltage and becomes smallest in a resonance frequency of the diaphragm. Therefore, it is at least essential that the frequency be increased such that the voltage of the applied AC voltage required to attain the certain output amount is at smaller.

The present invention has been made based on the above stated findings.

According to a first aspect of the present invention, there is provided a fuel cell system comprising: a fuel cell for generating electric power through an electrochemical reaction between a hydrogen-containing gas and an oxidizing gas; an electromagnetic diaphragm pump for supplying one of the hydrogen-containing gas and the oxidizing gas to the fuel cell at a flow rate corresponding to a voltage and a frequency of an AC voltage applied to the electromagnetic diaphragm pump; a flow detector for detecting a flow rate of the gas supplied from the electromagnetic diaphragm pump to the fuel cell; and a controller for controlling the voltage and the frequency of the AC voltage (hereinafter referred to as applied AC voltage) applied to the electromagnetic diaphragm pump; wherein the controller is configured to set the frequency of the applied AC voltage, control the voltage of the applied AC voltage in the set frequency to cause the flow rate of the gas detected by the flow detector to reach a target flow rate; and the controller is configured to newly set the frequency of the applied AC voltage to a frequency at which the voltage of the applied AC voltage becomes smaller than a predetermined voltage when the voltage of the applied AC voltage becomes equal to or greater than the predetermined voltage.

In accordance with this configuration, when the voltage of the applied AC voltage becomes the predetermined voltage, the frequency of the applied AC voltage is set so that the voltage of the applied AC voltage becomes smaller than the predetermined voltage. Therefore, a moving distance of a diaphragm is reduced, and electric power consumption in the electromagnetic diaphragm pump is suppressed even when the rubber is hardened, which can suppress a reduction of a power generation efficiency in the fuel cell system. In this case, an output amount of the electromagnetic diaphragm pump per reciprocation motion is reduced due to the reduction of the moving distance of the diaphragm. However, since the frequency of the applied AC voltage is newly set to the frequency at which the voltage of the applied AC voltage becomes smaller than the predetermined voltage, the reduction of the output amount is suppressed.

According to second aspect of the fuel cell system of the present invention, in the fuel cell system according to the first aspect, the controller may be configured to contain a plurality of operating frequencies which increase in an order in which the operating frequencies are to be set, control the flow rate of the gas with the frequency of the applied AC voltage set to any one of the operating frequencies, and newly set the frequency of the applied AC voltage to the operating frequency to be set next, in the order in which the operating frequencies are to be set, when the voltage of the applied AC voltage becomes equal to or greater than the predetermined voltage.

In accordance with this configuration, the voltage of the applied AC voltage becomes smaller than the predetermined voltage, and a reduction of the power generation efficiency is suppressed, with a simple configuration. In addition, since the operating frequency becomes higher, the reduction of the output amount can be prevented.

According to third aspect of the fuel cell system of the present invention, in the fuel cell system according to the first aspect, the controller may be configured to, when the voltage of the applied AC voltage becomes equal to or greater than the predetermined voltage, obtain the voltage of the applied AC voltage at which a predetermined flow rate is attained, in each frequency while changing the frequency of the applied AC voltage in a predetermined frequency range, and to newly set the frequency of the applied AC voltage to a frequency corresponding to a smallest voltage, from among voltages obtained.

In accordance with this configuration, the frequency of the applied AC voltage is newly set so that the voltage of the applied AC voltage becomes smallest. Therefore, the reduction of the power generation efficiency of the fuel cell system is suppressed. When the voltage of the applied AC voltage becomes equal to or greater than the predetermined voltage, the resonance frequency of electromagnetic diaphragm pump is typically higher. Therefore, the frequency is newly to a higher frequency. In this way, the reduction of the output amount can be prevented.

According to fourth aspect of the fuel cell system of the present invention, in the fuel cell system according to any one of the first to third aspect, the frequency which is newly set may be a frequency corresponding to a resonance frequency of a diaphragm of the electromagnetic diaphragm pump.

In accordance with this configuration, the frequency of the applied AC voltage is newly set to the frequency corresponding to the resonance frequency of the diaphragm. This makes it possible to suitably suppress the reduction of the power generation efficiency in the fuel cell system while preventing the reduction of the output amount.

According to fifth aspect of the fuel cell system of the present invention, in the fuel cell system according to the third or fourth aspect, the frequency to be newly set may be a frequency higher than a frequency set before the frequency is newly set.

In accordance with this configuration, even when the voltage of the applied AC voltage becomes smaller than the predetermined voltage and the moving distance of a diaphragm decreases, the frequency becomes higher. Thus, the reduction of the output amount is prevented.

According to sixth aspect of the fuel cell system of the present invention, in the fuel cell system according to any one of the first to fifth aspect, the controller may be configured to, when the frequency of the applied AC voltage is newly set, stop operation of the electromagnetic diaphragm pump if the voltage of the applied AC voltage does not become smaller than the predetermined voltage.

In accordance with this configuration, by defining as the predetermined voltage, the voltage which is equal to or less than the greatest voltage of the electromagnetic diaphragm pump, it is possible to avoid a problem that the greatest voltage is applied to the electromagnetic diaphragm pump and thereby the electromagnetic diaphragm will stop.

According to seventh aspect of the fuel cell system of the present invention, in the fuel cell system according to any one of the first to sixth aspect, the predetermined voltage may be smaller than a greatest voltage which is applicable to electromagnetic diaphragm pump.

In accordance with this configuration, it is possible to avoid a problem that the greatest voltage is applied to the electromagnetic diaphragm pump and thereby the electromagnetic diaphragm will stop.

Hereinafter, embodiments of the present invention will be described specifically with reference to the drawings.

Hereinafter, throughout the drawings, the same or corresponding components are designated by the same reference symbols, and will not be described in repetition.

### (Embodiment 1)

### [Configuration of fuel cell system]

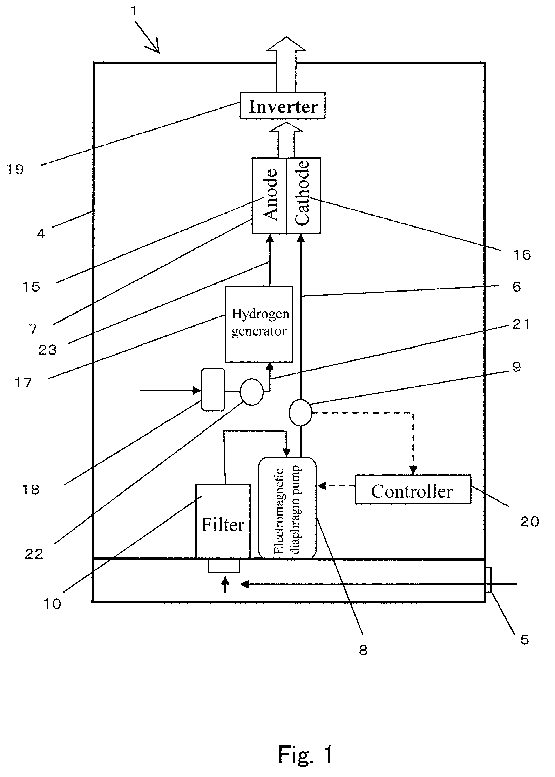

Fig. 1 is a functional block diagram schematically showing a configuration of a fuel cell system 1 according to Embodiment 1 of the present invention.

The fuel cell system 1 is applicable to, for example, a stationary fuel cell cogeneration system, a mobile fuel cell system, and an automobile fuel cell system, and is used as a power supply for household uses and industrial uses. As shown in Fig. 1, the fuel cell system 1 includes a fuel cell 7, an electromagnetic diaphragm pump 8, a flow detector 9 of an oxidizing gas and a controller 20. The fuel cell system 1 may further include a casing 4, a hydrogen generator 17, a fuel boosting blower 18, an inverter 19, etc..

The casing 4 accommodates the fuel cell 7, the electromagnetic diaphragm pump 8, the flow detector 9 of the oxidizing gas, the controller 20, the hydrogen generator 17, the fuel boosting blower 18, the inverter 19, etc.. The casing 4 has a suction port 5 through which the oxidizing gas is introduced.

The fuel cell 7 is a device configured to generate electric power through an electrochemical reaction between a hydrogen-containing gas and an oxidizing gas. The fuel cell 7 includes a fuel cell stack (not shown) in which a plurality of cells (not shown) are stacked together. The cell includes an anode 15, a cathode 16, and a polymer electrolyte membrane (not shown) disposed between the anode 15 and the cathode 16. The anode 15 is connected to the hydrogen generator 17 via a hydrogen-containing gas passage 23. The cathode 16 is connected to the electromagnetic diaphragm pump 8 via an oxidizing gas passage 16. In the cell, an electrochemical power generation reaction between the hydrogen-containing gas supplied to the anode 15 and the oxidizing gas supplied to the cathode 16 proceeds.

The hydrogen generator 17 reforms a fuel into the hydrogen-containing gas and supplies the hydrogen-containing gas to the anode 15 of the fuel cell 7. The hydrogen generator 17 is connected to a fuel boosting blower 18 via a fuel passage 21. The fuel boosting blower 18 supplies the fuel to the hydrogen generator 17 . A material of the fuel is not particularly limited so long as the hydrogen-containing gas is obtained from the fuel through a steam reforming reaction. As the fuel, for example, a compound containing carbon and hydrogen in molecules, such as hydrocarbon material, alcohol material, or ether material, is used. As preferable examples of raw materials produced into hydrogen, which are available in industry or at home, there are methanol, ethanol, dimethylether, methane, city gas, and LPG (liquefied petroleum gas). In addition to these, there are hydrocarbon oil such as gasoline, naphtha, coal oil, and diesel oil, which are obtained from petroleum.

The flow detector 22 of the fuel is a measurement device which detects a flow rate of the fuel supplied from the fuel boosting blower 18 to the hydrogen generator 17. The flow detector 22 of the fuel is provided in the fuel passage 21. The flow detector 22 of the fuel outputs the detected fuel flow rate to the controller 20.

The electromagnetic diaphragm pump 8 is a device which supplies the oxidizing gas to the cathode 16 of the fuel cell 7. The electromagnetic diaphragm pump 8 is provided in the oxidizing gas passage 6 through which the oxidizing gas flows from the suction port 5 to the cathode 16 of the fuel cell 7. As the oxidizing gas, for example, oxygen, air, or the like is used. The flow rate of the oxidizing gas supplied by the electromagnetic diaphragm pump 8 corresponds to a voltage and a frequency of an applied AC voltage (hereinafter "applied AC voltage") as will be described later. The applied AC voltage is applied from the inverter 19, an outside utility power (not shown), etc., to the electromagnetic diaphragm pump 8.

The flow detector 9 of the oxidizing gas is a measurement device for detecting a flow rate of the oxidizing gas supplied from the electromagnetic diaphragm pump 8 to the fuel cell 7. The detector of the oxidizing gas passage 6 is provided on the oxidizing gas passage 6 in a location between the electromagnetic diaphragm pump 8 and the fuel cell 7. The flow detector 9 of the oxidizing gas outputs the detected flow rate to the controller 20.

A filter 10 is a member which captures foreign matters from the oxidizing gas introduced through the suction port 5. The filter 10 is provided on the oxidizing gas passage 6 in a location between the suction port 5 and the electromagnetic diaphragm pump 8. This allows the oxidizing gas from which the foreign matters have been removed to be supplied to the electromagnetic diaphragm pump 8 and to the fuel cell 7.

The inverter 19 converts DC power generated in the fuel cell 7 into AC power having the same frequency as that of the AC power in an outside power utility (not shown). The AC power obtained in the inverter 19 is supplied to an electric power system.

The controller 20 is a device for controlling a voltage (voltage value) and a frequency of the applied AC voltage, based on the detected value output from the flow detector 9 of the oxidizing gas, and the like. The controller 2 having a processor function is sufficient. As the controller 20, there are a microcontroller, a CPU, a MPU, a logic circuit, a PLC (Programmable Logic Circuit), etc.. The voltage and frequency of the applied AC voltage are controlled in such a manner that an AC voltage is applied to the electromagnetic diaphragm pump 8 by using a power converter (not shown) and the controller 20 controls a voltage and a frequency of an output of the power converter. As the power converter, a well-known power converter may be used. In the present embodiment, for example, as the power converter, an inverter is used and the controller 20 performs PMW control with respect to the inverter. In this case, a magnitude of the voltage of the applied AC voltage is expressed by its duty ratio. When another configuration is used, the magnitude of the voltage of the applied AC voltage may be expressed by an analog amount (volume).

### [Configuration of electromagnetic diaphragm pump]

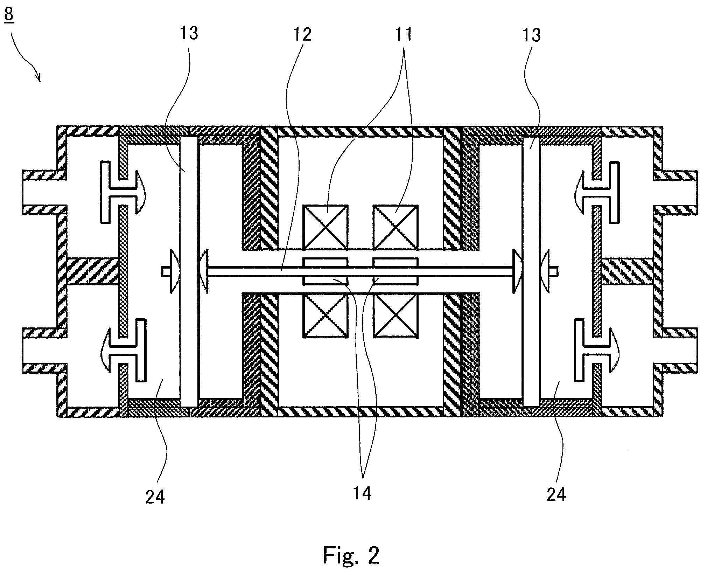

Fig. 2 is a cross-sectional view showing the electromagnetic diaphragm pump 8 used in the fuel cell system of Fig. 1.

The electromagnetic diaphragm pump 8 includes electromagnets 11, a rod 12, diaphragms 13, permanent magnets 14, and chambers 24. The permanent magnets 14 are fastened to the rod 12 and positioned to correspond to the electromagnets 11, respectively. The diaphragms 13 are mounted to both ends of the rod 12, respectively. The diaphragms 13 are made of an elastic material such as robber. Pressure-feeding surfaces of the diaphragms 13 are disposed in a direction perpendicular to the rod 12.

The permanent magnets 14 and the electromagnets 11 mutually act magnetically, thereby causing the rod 12 to reciprocate. According to this reciprocating motion, the diaphragms 13 reciprocate. When the diaphragms 13 move in a direction to increase the volume of the chambers 24, a pressure in the chambers 24 decreases, so that the oxidizing gas flows into the chambers 24 through the suction port 5 (Fig. 1). Then, when the diaphragms 13 move in a direction to decrease the volume of the chambers 24, the pressure in the chambers 24 increases, so that the oxidizing gas is output to the fuel cell 7 (Fig. 1).

The number of times the diaphragms 13 reciprocate depends on the frequency of the applied AC voltage. As the frequency of the applied AC voltage increases, the number of times of the reciprocation motion of the diaphragms 13 per unit time increases. A moving distance (amplitude) of the diaphragms 13 depends on the voltage of the applied AC voltage. As the voltage of the applied AC voltage increases, the moving distance of the diaphragms 13 increases. Because of this, the flow rate of the output oxidizing gas depends on the voltage and frequency of the applied AC voltage.

Note that the diaphragms 13 made of rubber are elastically deformed. Because of this, in a state in which elasticity of the diaphragms 13 is great, a change in a volume of the chambers 24 is greater than a change in the volume of the chambers 24 which is caused by the movement of the diaphragms 13. Because of this, the amount of the output oxidizing gas is great. On the other hand, when the rubber is hardened and the elasticity of the diaphragms 13 decreases, a deformation amount of the diaphragms 13 becomes smaller, and the amount of the output oxidizing gas decreases. Therefore, the amount of the output oxidizing gas depends on the elasticity of the diaphragms 13 in addition to the voltage and frequency of the applied AC voltage.

### [Control in fuel cell system]

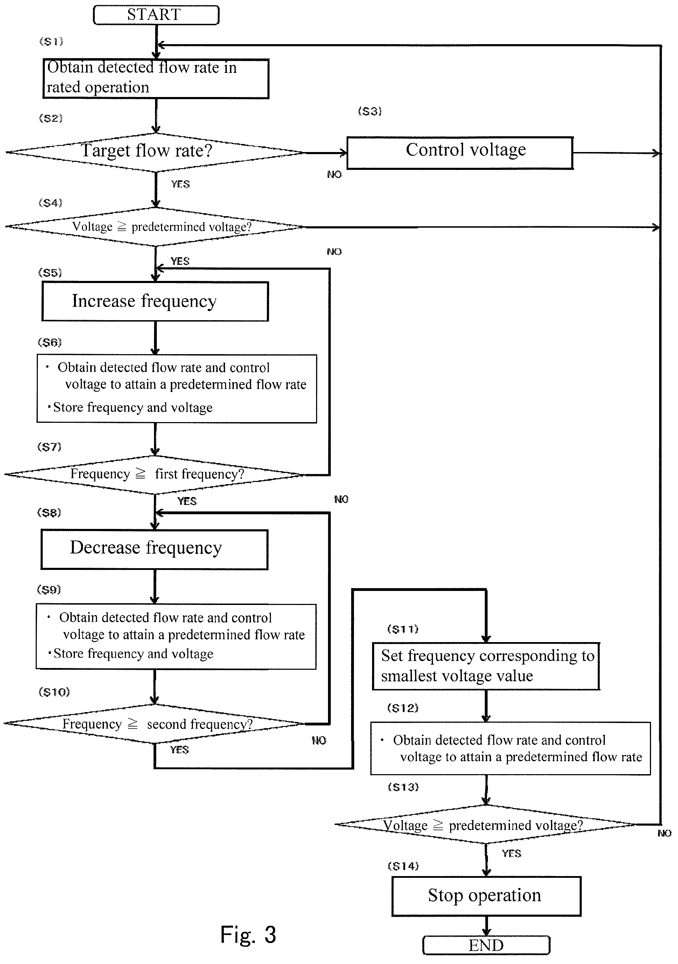

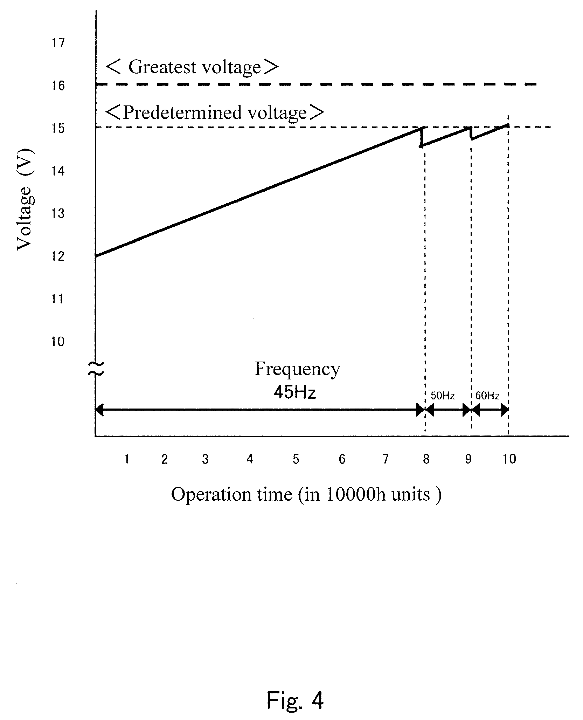

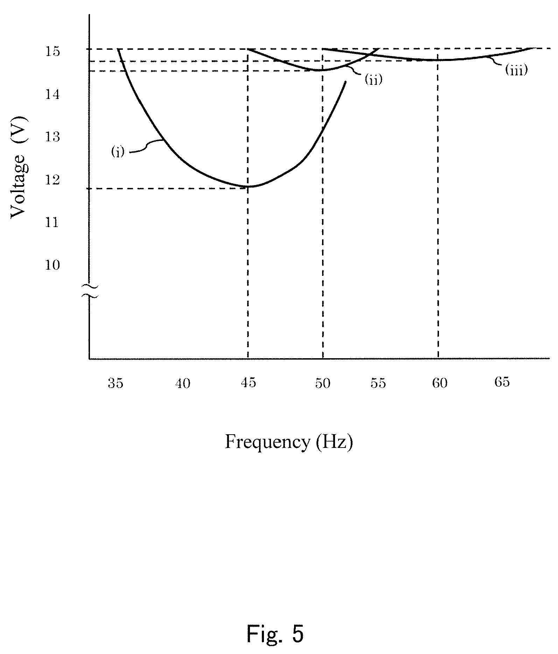

Fig. 3 is a flowchart showing an example of supply control of a reactive gas which is performed by the controller 20 in the fuel cell system 1. Fig. 4 is a graph schematically showing a relationship between the operation time and the voltage of the applied AC voltage in the fuel cell system 1. Fig. 5 is a graph showing a relationship between the voltage of the applied AC voltage and the frequency of the applied AC voltage. A solid line (i) indicates a relationship between the voltage of the applied AC voltage and the frequency of the applied AC voltage in a case where the operation time is 0h. A solid line (ii) indicates a relationship between the voltage of the applied AC voltage and the frequency of the applied AC voltage in a case where the operation time is 80000h. A solid line (iii) indicates a relationship between the voltage of the applied AC voltage and the frequency of the applied AC voltage in a case where the operation time is 90000h.

### <Operation characteristic of electromagnetic diaphragm pump>

First of all, an operation characteristic of the electromagnetic diaphragm pump 8 will be described. As shown in Fig. 5, the voltage of the applied AC voltage in the electromagnetic diaphragm pump 8 which is required to output a gas of a predetermined flow rate (e.g., 50NL/min) (in the present embodiment, oxidizing gas) changes depending on the frequency of the applied AC voltage. Hereinafter, a curve indicating a change in the voltage of the applied AC voltage with respect to a change in the frequency of the applied AC voltage will be referred to as "voltage-frequency curve". In this voltage-frequency curve, the voltage of the applied AC voltage becomes smallest when the frequency of the applied AC voltage matches a resonance frequency of the diaphragms 13. As hardening of the diaphragms 13 progresses, the resonance frequency of the diaphragms 13 and the voltage of the applied AC voltage in the frequency which matches the resonance frequency increase. Because of this, the voltage-frequency curve shifts such that a smallest voltage of the applied AC voltage and a frequency corresponding to the smallest voltage increase as the operation time (accumulated operation time) of the fuel cell system 1 increases. In the example shown in Fig. 5, the smallest voltage of the applied AC voltage and the frequency corresponding to the smallest voltage are 12V and 45Hz, respectively in an initial state (operation time : 0h), are 14.3V and 50Hz, respectively, in the operation time of 80000h, and are 14.6V and 60Hz, respectively in the operation time of 90000h.

### <Change in operation characteristic of electromagnetic diaphragm pump which progresses over time>

Next, a change in the operation characteristic of the electromagnetic diaphragm pump 8 which progresses over time will be described. In the present embodiment, as will be described later, at a particular time point, the frequency of the applied AC voltage is set to a frequency (frequency which matches the resonance frequency of the diaphragms 13) corresponding to the smallest voltage of the applied AC voltage at this time point. In the set frequency, the voltage of the applied AC voltage is controlled so that the flow rate of the oxidizing gas reaches a target flow rate. As can be clearly understood from the above description, the set frequency shifts with a lapse of use time of the diaphragm 13, as the operation time of the fuel cell system 1 increases. The set frequency deviates from the frequency corresponding to the smallest voltage of the applied AC voltage, and the voltage-frequency curve shifts such that the smallest voltage of the applied AC voltage and the frequency corresponding to the smallest voltage increase. Because of this, the voltage of the applied AC voltage requited to output the oxidizing gas of the predetermined flow rate (e.g., 50NL/min) increases. In the example of Fig. 4 and the example of Fig. 5, in an initial state (operation time : 0h), the frequency of the applied AC voltage is set to 45Hz which is the frequency corresponding to the smallest voltage of the applied AC voltage at this time point. The voltage of the applied AC voltage requited to output the oxidizing gas of the predetermined flow rate (e.g., 50NL/min) is 12V in the initial state, but increases up to 15V in in the operation time of 80000h.

### <Supply control of oxidizing gas>

Next, supply control of the oxidizing gas will be described. The controller 20 sets the frequency of the applied AC voltage, and controls the voltage of the applied AC voltage in the set frequency. The controller 20 performs control so that the flow rate of the gas detected by the flow detector 9 reaches the target flow rate. When the voltage of the applied AC voltage becomes equal to or greater than a predetermined voltage, the controller 20 newly sets the frequency of the applied AC voltage to a frequency in which the voltage of the applied AC voltage becomes smaller than the predetermined voltage. At this time, the controller 20 obtains the voltage of the applied AC voltage at which the flow rate becomes a predetermined flow rate in every frequency while changing the frequency of the applied AC voltage within a predetermined frequency range. Then, the controller 20 newly sets the frequency of the applied AC voltage to a frequency corresponding to a smallest voltage, among the obtained voltages.

With reference to Fig. 3, specifically, the controller 20 initially performs a rated operation of the fuel cell system 1. Specifically, the controller 20 sets an initial value of the frequency of the applied AC voltage to, for example, 45Hz. The frequency of 45Hz is a frequency at which the voltage of the applied AC voltage for supplying the oxidizing gas of the predetermined flow rate (e.g., 50NL/min) becomes smallest in the voltage-frequency curve (i) in Fig. 5.

The controller 20 obtains the flow rate detected by the flow detector 9 of the oxidizing gas (step S1), and controls the voltage of the applied AC voltage so that the obtained flow rate reaches the target flow rate (No in step S2, S3, S1).

When the obtained flow rate reaches the target flow rate (YES in step S2), the controller 20 determines whether or not the voltage of the applied AC voltage is equal to or greater than the predetermined voltage (step S4). As shown in Fig. 4, the predetermined voltage is set to, for example, 15V. The predetermined voltage is set to a voltage smaller than a greatest voltage (e.g., 16V) which can be applied to electromagnetic diaphragm pump 8.

If it is determined that the voltage of the applied AC voltage is smaller than the predetermined voltage (No in step S4), the controller 20 repeats step S1 ∼ Step S4.

In the above described manner, the controller 20 carries out the rated operation of the fuel cell system 1.

When the operation time of the fuel cell system 1 increases with a passage of time, the voltage of the applied AC voltage becomes equal to or greater than the predetermined voltage, in step S4. In the example of Fig. 4, the voltage of the applied AC voltage becomes 15V which is the predetermined voltage (at this time, the flow rate is 50NL/min) in the operation time of 80000h.

Thereby, the controller 20 determines that the voltage of the applied AC voltage is equal to or greater than the predetermined voltage (Yes in step S4), and newly sets the frequency of the applied AC voltage (step S5 ∼ step S13).

Specifically, the controller 20 increases the frequency of the applied AC voltage at predetermined intervals of, for example, 1Hz from the set frequency, 45Hz (step S5). Then, the controller 20 controls the voltage of the applied AC voltage so that the flow rate of the oxidizing gas reaches a predetermined flow rate (may be another suitable fixed flow rate) and stores this voltage and the corresponding frequency (step S6). So long as the frequency does not become equal to or greater than a first frequency (e.g., 55Hz) (NO in step S7), the controller 20 increases the frequency while controlling the voltage for every frequency as described above, and stores each frequency and the corresponding voltage (step S5, step S6). If the voltage of the applied AC voltage is going to exceed the predetermined voltage, the voltage of the applied AC voltage is controlled not to exceed the predetermined voltage while restricting the flow rate. The first frequency is a predetermined frequency and is, for example, 65Hz.

When the frequency of the applied AC voltage reaches the first frequency (YES in step S7), the controller 20 decreases the frequency of the applied AC voltage at predetermined intervals of for example, 1Hz from the set frequency 45Hz (step S8). Then, the controller 20 controls the voltage of the applied AC voltage so that the detected flow rate of the oxidizing gas reaches a predetermined flow rate (may be another suitable fixed flow rate) in the decreased frequency and stores this voltage and the corresponding frequency (step S9). So long as the frequency does not become equal to or less than a second frequency (e.g., 45Hz) (NO in step S10), the controller 20 decreases the frequency while controlling the voltage as described above for every frequency, and stores the frequency and the corresponding voltage (stepS8, step S9). If the voltage of the applied AC voltage is going to exceed the predetermined voltage, the voltage of the applied AC voltage is controlled not to exceed the predetermined voltage while restricting the flow rate. In this case, the second frequency is a predetermined frequency, and is, for example, 40Hz.

When the frequency of the applied AC voltage reaches the second frequency (YES in step S10), the controller 20 newly sets the frequency to a frequency at which the voltage becomes smallest with reference to the relationship between the voltage of the applied AC voltage and the frequency of the applied AC voltage (step S11). In the example of Fig. 5, in the voltage-frequency curve (ii), the frequency at which the voltage becomes smallest is 50Hz. Thus, the voltage used to control the detected flow rate of the oxidizing gas such that it reaches the predetermined flow rate (e.g., 50NL/min) decreases. In the example of Fig. 4 and the example of Fig. 5, the voltage becomes 14.3V in the voltage-frequency curve (ii) of Fig. 5.

Then, the controller 20 controls the voltage of the applied AC voltage so that the detected flow rate of the oxidizing gas reaches the predetermined flow rate (e.g., 50NL/min) (step S12), and then determines whether or not the controlled voltage is equal to or greater than the predetermined voltage (step S 13).

If it is determined that the controlled voltage is equal to or greater than the predetermined voltage (YES in step S13), the controller 20 stops the operation (step S14). Thus, it becomes possible to avoid a problem that a greatest voltage will be applied to the electromagnetic diaphragm pump and thereby the electromagnetic diaphragms will stop. Thereafter, the controller 20 terminates this control.

On the other hand, as described above, at this time, the controlled voltage is 14.3V. Therefore, the controller 20 determines that the controlled voltage is less than the predetermined voltage (NO in step S13), and the process returns to step S1.

Then, as described above, the controller 20 causes the fuel cell system 1 to perform the rated operation at the frequency of 50Hz which has been newly set (NO in step S1 ∼ S4).

In the example of Fig. 4 and the example of Fig. 5, when the operation time of the fuel cell system 1 becomes 90000h thereafter, the voltage of the applied AC voltage becomes the predetermined voltage (YES in step S4), and the controller 20 newly sets the frequency (YES in step S4, S5∼S13). At this time, the frequency is newly set to 60Hz, and the voltage of the applied AC voltage used to control the detected flow rate of the oxidizing gas such that it reaches the predetermined flow rate becomes 14.6V.

Thereafter, the controller 20 causes the fuel cell system 1 to perform the rated operation at the frequency of 60Hz which has been newly set (NO in step S1 ∼ S4).

### [Advantages]

In accordance with the fuel cell system 1 of the present embodiment, even when the diaphragms 13 are hardened due to an increase in the operation time of the electromagnetic diaphragm pump 8, a low-temperature environment, etc., the frequency of the applied AC voltage is newly set to the frequency at which the voltage becomes smaller when the voltage of the applied AC voltage reaches the predetermined voltage. Since the voltage is decreased in this way, the moving distance of the diaphragms 13 decreases, and a load of diaphragm 13 per reciprocation motion decreases. Because of this, electric power consumption in the electromagnetic diaphragm pump 8 is lessened, and reduction in a power generation efficiency in the fuel cell system 1 is suppressed. On the other hand, when the voltage of the applied AC voltage becomes equal to or greater than the predetermined voltage, the resonance frequency of the electromagnetic diaphragm pump 8 increases. Therefore, the frequency of the applied AC voltage is newly set to a higher frequency. This makes it possible to prevent reduction of the output amount of the electromagnetic diaphragm pump 8.

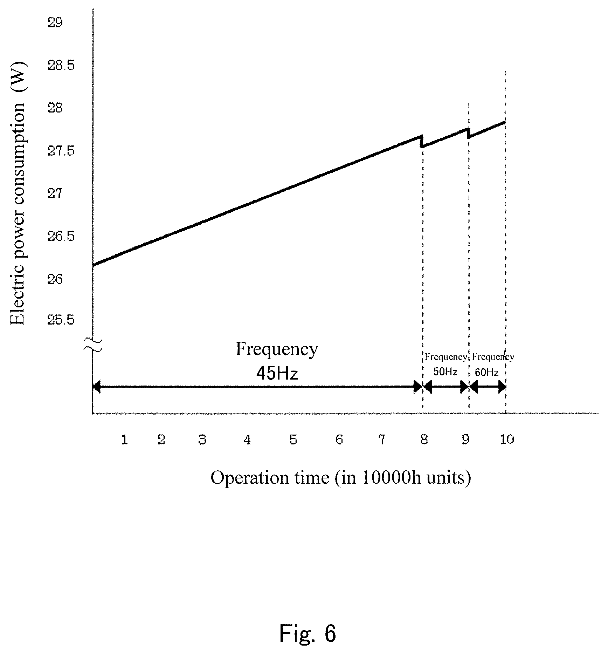

Specifically, Fig. 6 is a graph showing a relationship between the electric power consumption (W) and the operation time (0h) in the electromagnetic diaphragm pump 8. As shown in Figs. 4 and 6, the electric power consumption in the electromagnetic diaphragm pump 8 increases substantially in proportion to the voltage of the applied AC voltage as the operation time of the fuel cell system 1 increases. When the voltage of the applied AC voltage becomes equal to or greater than the predetermined voltage, the frequency of the applied AC voltage is newly set to a frequency at which this voltage becomes smaller. Therefore, the electric power consumption in the electromagnetic diaphragm pump 8 is lessened and hence reduction of the power generation efficiency in the fuel cell system 1 is suppressed.

Even when the voltage of the applied AC voltage decreases and the moving distance of the diaphragms 13 decreases, the number of times of the reciprocation motion of the diaphragms 13 increases due to an increase in the frequency newly set. Because of this, reduction of the output amount of the electromagnetic diaphragm pump 8 can be prevented.

Since the frequency of the applied AC voltage which has been newly set matches the resonance frequency, reduction of the power generation efficiency in the fuel cell system 1 can be suppressed more suitably.

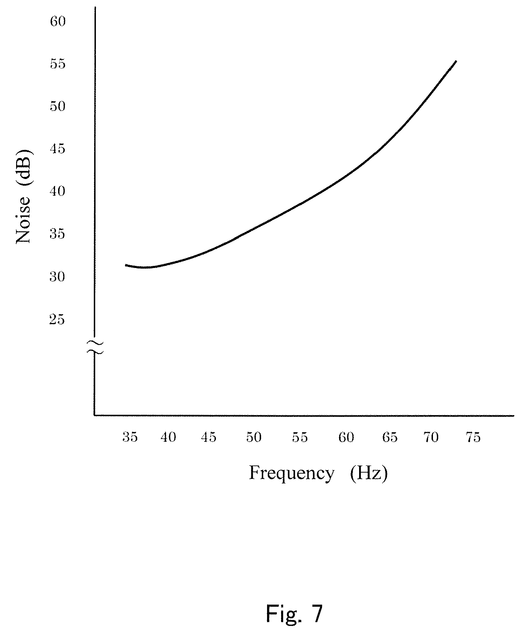

Fig. 7 is a graph showing a relationship between the frequency of the applied AC voltage and a noise generated in the fuel cell system 1. As the frequency of the applied AC voltage is smaller, the noise generated in the fuel cell system 1 is less. As shown in Fig. 4, an operation period of the fuel cell system 1 corresponding to the frequency set in the initial state is longer than an operation period corresponding to a frequency newly set next. In view of this, by setting smaller the frequency set in the initial state in which the operation period is longer, and then making newly set frequency higher, the noise generated in the fuel cell system 1 can be mitigated for the overall operation time of the fuel cell system 1.

The predetermined voltage is defined as the voltage which is equal to or less than the greatest voltage of the electromagnetic diaphragm pump 8. This makes it possible to avoid a problem that the greatest voltage will be applied to the electromagnetic diaphragm pump 8 and thereby the electromagnetic diaphragm pump 8 will stop.

In Embodiment 1, the frequency of the applied AC voltage newly set when the voltage of the applied AC voltage becomes equal to or greater than the predetermined voltage is the resonance frequency of the diaphragms 13. However, the frequency which is newly set is not limited to this, so long as the voltage of the applied AC voltage becomes smaller than the predetermined voltage.

### (Embodiment 2)

In the fuel cell system 1 of Embodiment 2, the controller 20 is configured to contain a plurality of operating frequencies which increase in the order in which they are to be set. The controller 20 sets the frequency of the applied AC voltage to any one of these operating frequencies and controls the flow rate of the gas in the set frequency. When the voltage of the applied AC voltage becomes equal to or greater than the predetermined voltage, the controller 20 newly sets the frequency of the applied AC voltage to the operating frequency to be set next in the setting order. The other configuration of the fuel cell system 1 of Embodiment 1 is the same as that of the fuel cell system 1 of Embodiment 1. The stored operating frequencies are, for example, a frequency which matches the resonance frequency of the diaphragms 13 of the electromagnetic diaphragm pump 8, and the like. Hereinafter, supply control of the oxidizing gas will be described specifically.

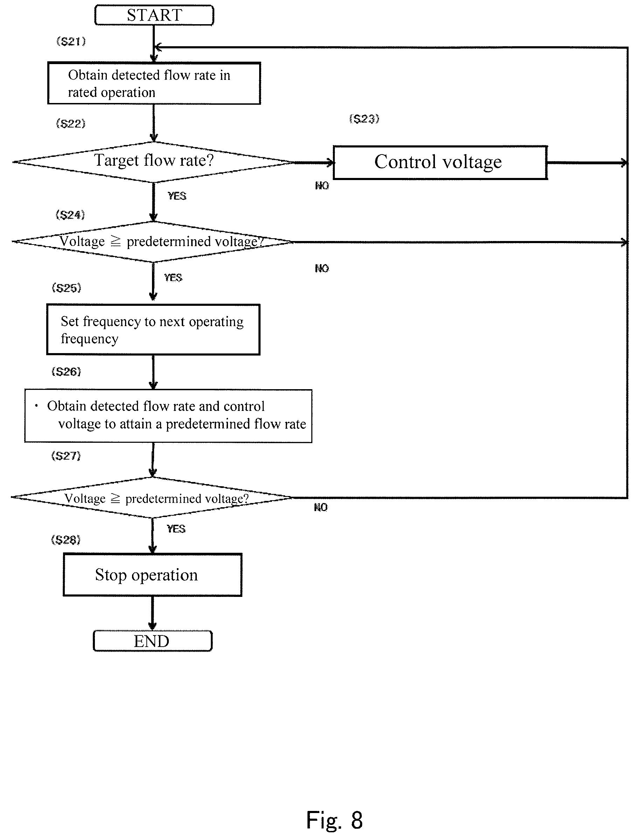

Fig. 8 is a flowchart showing an example of supply control of the oxidizing gas which is performed by the controller 20 in the fuel cell system 1 according to Embodiment 2.

The controller 20 contains the frequencies 45Hz, 50Hz, and 60Hz at which the voltages of the applied AC voltage in the voltage-frequency curves (i)∼ (iii) of Fig. 5 become smallest, as the operating frequencies to be set in this order (first, second, and third order), respectively.

With reference to Fig. 8, the controller 20 firstly sets the frequency of the applied AC voltage to the operating frequency of 45Hz to be set in the first order. Then, the controller 20 obtains the flow rate detected by the flow detector 9 of the oxidizing gas (step S21), and controls the voltage of the applied AC voltage so that the obtained flow rate reaches the target flow rate (NO in step S22, S23, S21).

When the obtained flow rate reaches the target flow rate (YES in step S22), the controller 20 determines whether or not the voltage of the applied AC voltage is equal to or greater than the predetermined voltage (step S24).

If it is determined that the voltage of the applied AC voltage is less than the predetermined voltage (NO in step S24), the controller 20 repeats step S21 ∼ S24.

Thus, the controller 20 causes the fuel cell system 1 to perform the rated operation.

When the operation time of the fuel cell system 1 increases with a passage of time, the voltage of the applied AC voltage becomes equal to or greater than the predetermined voltage in step S24. In the example of Fig. 4, the voltage of the applied AC voltage becomes 12V which is the predetermined voltage, after a lapse of the operation time of 80000h.

Then, the controller 20 determines that the voltage of the applied AC voltage is equal to or greater than the predetermined voltage (YES in step S24), and sets the frequency of the applied AC voltage to the operating frequency of 50Hz to be set next (the operating frequency set in the second order) (step S25).

Then, the controller 20 controls the voltage of the applied AC voltage so that the detected flow rate of the oxidizing gas reaches the predetermined flow rate (e.g., 50NL/min) (step S26), and then determines whether or not the controlled voltage is equal to or greater than the predetermined voltage (step S27).

If it is determined that the controlled voltage is equal to or greater than the predetermined voltage (YES in step S27), the controller 20 stops the operation (step S28) and terminates this control.

On the other hand, as described above, at this time, the controlled voltage becomes 14.3V. Therefore, the controller 20 determines that the controlled voltage is less than the predetermined voltage (NO in step S27), and the process returns to step S21.

Then, as described above, the controller 20 causes the fuel cell system 1 to perform the rated operation at the frequency of 50Hz which has been newly set (NO in step S21 ∼ S24).

In the example of Fig. 4 and the example of Fig. 5, when the operation time of the fuel cell system 1 becomes 90000h thereafter, the voltage of the applied AC voltage becomes the predetermined voltage, and the controller 20 sets the set frequency to 60Hz which is a next operating frequency (operating frequency to be set in the third order) (YES in step S24, S25∼S27). At this time, the voltage of the applied AC voltage used to control the detected flow rate of the oxidizing gas such that it reaches the predetermined flow rate becomes 14.6V.

Thereafter, the controller 20 causes the fuel cell system 1 to perform the rated operation at the operating frequency of 60Hz which has been newly set (NO in step S21 ∼ S24).

In accordance with the fuel cell system 1 having the above described configuration, the frequency of the applied AC voltage is newly set to an operating frequency at which the voltage of the applied AC voltage becomes smaller than the predetermined voltage, when the voltage of the applied AC voltage becomes equal to or greater than the predetermined voltage. This frequency is the prestored operating frequency. Therefore, the voltage of the applied AC voltage is decreased and reduction of the power generation efficiency is suppressed with a simple configuration.

The prestored frequencies are the plurality of operating frequencies which increase in the order in which they are to be set. Therefore, the frequency of the applied AC voltage is newly set so that the operating frequency becomes higher. This makes it possible to prevent reduction of the output amount of the electromagnetic diaphragm pump 8.

In Embodiment 2, the prestored operating frequencies are frequencies at which the voltage of the applied AC voltage becomes smallest, for example, the resonance frequency of the diaphragm 13. Note that the frequency which is newly set is not limited to these, so long as the voltage of the applied AC voltage becomes smaller than the predetermined voltage, in the frequency newly set.

### (Embodiment 3)

In the fuel cell systems 1 of Embodiment 1 and Embodiment 2, the electromagnetic diaphragm pump 8 is used to supply the oxidizing gas. By comparison, in the fuel cell system 1 of Embodiment 3 of the present invention, an electromagnetic diaphragm pump is used instead of the fuel boosting blower 18 for supplying the fuel to the hydrogen generator 17. The other components are the same as those of the fuel cell systems 1 of Embodiment 1 and Embodiment 2.

In this case, the electromagnetic diaphragm pump supplies the hydrogen-containing gas generated by reforming the fuel gas from the hydrogen generator 17 to the anode 15 of the fuel cell 7.

In addition to the use of the electromagnetic diaphragm pump instead of the fuel boosting blower 18, the oxidizing gas supply device may be configured as a normal blower.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

### Industrial Applicability

A fuel cell system of the present invention is useful as a fuel cell system or the like which is capable of suppressing reduction of a power generation efficiency in use under a low-temperature environment and for a long period of time, in a fuel cell system using an electromagnetic diaphragm pump as a supply section of a reactive gas.

### Reference Sings Lists

- 1: fuel cell system
- 7: fuel cell
- 8: electromagnetic diaphragm pump
- 9: flow detector
- 20: controller

## Claims

1. A fuel cell system comprising:
a fuel cell for generating electric power through an electrochemical reaction between a hydrogen-containing gas and an oxidizing gas;
an electromagnetic diaphragm pump for supplying one of the hydrogen-containing gas and the oxidizing gas to the fuel cell at a flow rate corresponding to a voltage and a frequency of an AC voltage applied to the electromagnetic diaphragm pump;
a flow detector for detecting a flow rate of the gas supplied from the electromagnetic diaphragm pump to the fuel cell; and
a controller for controlling the voltage and the frequency of the AC voltage (hereinafter referred to as applied AC voltage) applied to the electromagnetic diaphragm pump;
wherein the controller is configured to set the frequency of the applied AC voltage, control the voltage of the applied AC voltage in the set frequency to cause the flow rate of the gas detected by the flow detector to reach a target flow rate; and
the controller is configured to newly set the frequency of the applied AC voltage to a frequency at which the voltage of the applied AC voltage becomes smaller than a predetermined voltage when the voltage of the applied AC voltage becomes equal to or greater than the predetermined voltage.

2. The fuel cell system according to Claim 1, wherein the controller is configured to contain a plurality of operating frequencies which increase in an order in which the operating frequencies are to be set, control the flow rate of the gas with the frequency of the applied AC voltage set to any one of the operating frequencies, and newly set the frequency of the applied AC voltage to the operating frequency to be set next, in the order in which the operating frequencies are to be set, when the voltage of the applied AC voltage becomes equal to or greater than the predetermined voltage.

3. The fuel cell system according to Claim 1, wherein the controller is configured to, when the voltage of the applied AC voltage becomes equal to or greater than the predetermined voltage, obtain the voltage of the applied AC voltage at which a predetermined flow rate is attained, in each frequency while changing the frequency of the applied AC voltage in a predetermined frequency range, and to newly set the frequency of the applied AC voltage to a frequency corresponding to a smallest voltage, from among voltages obtained.

4. The fuel cell system according to any one of Claims 1 to 3, wherein the frequency which is newly set is the frequency corresponding to a resonance frequency of a diaphragm of the electromagnetic diaphragm pump.

5. The fuel cell system according to Claim 3 or 4, wherein the frequency to be newly set is a frequency higher than a frequency set before the frequency is newly set.

6. The fuel cell system according to any one of Claims 1 to 5, wherein the controller is configured to, when the frequency of the applied AC voltage is newly set, stop operation of the electromagnetic diaphragm pump if the voltage of the applied AC voltage does not become smaller than the predetermined voltage.

7. The fuel cell system according to any one of Claims 1 to 6, wherein the predetermined voltage is smaller than a greatest voltage which is applicable to electromagnetic diaphragm pump.

## Patentansprüche

1. Brennstoffzellensystem, umfassend:
eine Brennstoffzelle zum Erzeugen von Strom durch eine elektrochemische Reaktion zwischen einem Wasserstoff enthaltenden Gas und einem oxidierenden Gas,
eine elektromagnetische Membranpumpe zum Zuführen des Wasserstoff enthaltenden Gases oder des oxidierenden Gases zu der Brennstoffzelle mit einer Flussrate, die der Spannung oder Frequenz einer an der elektromagnetischen Membranpumpe angelegten Wechselspannung entspricht,
einen Flussdetektor zum Erfassen der Flussrate des von der elektromagnetischen Membranpumpe zu der Brennstoffzelle zugeführten Gases, und
eine Steuereinrichtung zum Steuern der Spannung und der Frequenz der an der elektromagnetischen Membranpumpe angelegten Wechselspannung (nachfolgend als angelegte Wechselspannung bezeichnet),
wobei die Steuereinrichtung konfiguriert ist zum Setzen der Frequenz der angelegten Wechselspannung, zum Steuern der Spannung der angelegten Wechselspannung bei der gesetzten Frequenz, um zu veranlassen, dass die durch den Flussdetektor erfasste Flussrate des Gases eine Zielflussrate erreicht, und
wobei die Steuereinrichtung konfiguriert ist, um die Frequenz der angelegten Wechselspannung neu auf eine Frequenz zu setzen, bei der die Spannung der angelegten Wechselspannung kleiner als eine vorbestimmte Spannung wird, wenn die Spannung der angelegten Wechselspannung gleich oder größer als die vorbestimmte Spannung wird.

2. Brennstoffzellensystem nach Anspruch 1, wobei die Steuereinrichtung konfiguriert ist zum Enthalten einer Vielzahl von Betriebsfrequenzen, die sich in der Reihenfolge, in der die Betriebsfrequenzen zu setzen sind, erhöhen, zum Steuern der Flussrate des Gases mit der Frequenz der angelegten Wechselspannung, die auf eine der Betriebsfrequenzen gesetzt ist, und zum neuen Setzen der Frequenz der angelegten Wechselspannung auf die nächste zu setzende Betriebsfrequenz in der Reihenfolge, in welcher die Betriebsfrequenzen zu setzen sind, wenn die Spannung der angelegten Wechselspannung gleich oder größer als die vorbestimmte Spannung wird.

3. Brennstoffzellensystem nach Anspruch 1, wobei die Steuereinrichtung konfiguriert ist zum, wenn die Spannung der angelegten Wechselspannung gleich oder größer als die vorbestimmte Spannung wird, Erhalten der Spannung der angelegten Wechselspannung, mit der eine vorbestimmte Flussrate erzielt wird, bei jeder Frequenz, während die Frequenz der angelegten Wechselspannung in einem vorbestimmten Frequenzbereich geändert wird, und zum neuen Setzen der Frequenz der angelegten Wechselspannung auf eine Frequenz in Entsprechung zu einer kleinsten Spannung aus den erhaltenen Spannungen.

4. Brennstoffzellensystem nach einem der Ansprüche 1 bis 3, wobei die neu gesetzte Frequenz die Frequenz in Entsprechung zu einer Resonanzfrequenz einer Membrane der elektromagnetischen Membranpumpe ist.

5. Brennstoffzellensystem nach Anspruch 3 oder 4, wobei die neu zu setzende Frequenz eine Frequenz ist, die höher als eine vor dem neuen Setzen der Frequenz gesetzte Frequenz ist.

6. Brennstoffzellensystem nach einem der Ansprüche 1 bis 5, wobei die Steuereinrichtung konfiguriert ist zum, wenn die Frequenz der angelegten Wechselspannung neu gesetzt wird, Stoppen des Betriebs der elektromagnetischen Membranpumpe, wenn die Spannung der angelegten Wechselspannung nicht kleiner als die vorbestimmte Spannung wird.

7. Brennstoffzellensystem nach einem der Ansprüche 1 bis 6, wobei die vorbestimmte Spannung kleiner als die größte Spannung, die an der elektromagnetischen Membranpumpe angelegt werden kann, ist.

## Revendications

1. Système de pile à combustible comprenant :
une pile à combustible pour générer de l'énergie électrique par une réaction électrochimique entre un gaz contenant de l'hydrogène et d'un gaz oxydant ;
une pompe à membrane électromagnétique pour fournir l'un parmi le gaz contenant de l'hydrogène et le gaz oxydant à la pile à combustible avec une vitesse d'écoulement correspondant à une tension et une fréquence d'une tension alternative appliquée à la pompe à membrane électromagnétique ;
un détecteur d'écoulement pour détecter une vitesse d'écoulement du gaz fourni de la pompe à membrane électromagnétique à la pile à combustible ; et
un contrôleur pour contrôler la tension et la fréquence de la tension alternative (ci-après dénommée tension alternative appliquée) appliquée à la pompe à membrane électromagnétique ;
dans lequel le contrôleur est configuré pour régler la fréquence de la tension alternative appliquée, contrôler la tension de la tension alternative appliquée à la fréquence réglée de manière à ce que la vitesse d'écoulement du gaz détectée par le détecteur d'écoulement atteigne une vitesse d'écoulement cible ; et
le contrôleur est configuré pour régler à nouveau la fréquence de la tension alternative appliquée à une fréquence à laquelle la tension de la tension alternative appliquée devient inférieure à une tension prédéterminée lorsque la tension de la tension alternative appliquée devient égale ou supérieure à la tension prédéterminée.

2. Système de pile à combustible selon la revendication 1, dans lequel le contrôleur est configuré pour contenir une pluralité de fréquences de fonctionnement qui augmente dans un ordre dans lequel les fréquences de fonctionnement sont à régler, contrôler la vitesse d'écoulement du gaz avec la fréquence de la tension alternative appliquée réglée sur l'une quelconque des fréquences de fonctionnement, et régler à nouveau la fréquence de la tension alternative appliquée à la prochaine fréquence de fonctionnement devant être réglée, dans l'ordre dans lequel les fréquences de fonctionnement sont à régler, lorsque la tension de la tension alternative appliquée devient égale ou supérieure à la tension prédéterminée.

3. Système de pile à combustible selon la revendication 1, dans lequel le contrôleur est configuré pour, lorsque la tension de la tension alternative appliquée devient égale ou supérieure à la tension prédéterminée, obtenir la tension de la tension alternative appliquée à laquelle une vitesse d'écoulement prédéterminée est atteinte, à chaque fréquence tout en changeant la fréquence de la tension alternative appliquée dans une plage de fréquences prédéterminée, et régler à nouveau la fréquence de la tension alternative appliquée à une fréquence correspondant à une tension la plus petite, parmi des tensions obtenues.

4. Système de pile à combustible selon l'une quelconque des revendications 1 à 3, dans lequel la fréquence qui est réglée à nouveau est la fréquence correspondant à une fréquence de résonance d'une membrane de la pompe à membrane électromagnétique.

5. Système de pile à combustible selon l'une quelconque des revendications 3 ou 4, dans lequel la fréquence devant être réglée à nouveau est une fréquence supérieure à une fréquence réglée avant que la fréquence ne soit réglée à nouveau.

6. Système de pile à combustible selon l'une quelconque des revendications 1 à 5, dans lequel le contrôleur est configuré pour, lorsque la fréquence de la tension alternative appliquée est réglée à nouveau, arrêter le fonctionnement de la pompe à membrane électromagnétique si la tension de la tension alternative appliquée ne devient pas inférieure à la tension prédéterminée.

7. Système de pile à combustible selon l'une quelconque des revendications 1 à 6, dans lequel la tension prédéterminée est inférieure à une tension la plus grande qui est applicable à une pompe à membrane électromagnétique.
